# EUROPEAN PATENT SPECIFICATION

(11) **EP 3 216 377 B1**
(45) Date of publication and mention of the grant of the patent: **16.03.2022**
(21) Application number: 15857127.3
(22) Date of filing: 06.11.2015
(51) Int. Cl.: G05D 1/02, A47L 11/24

(54) **GUIDE-TYPE VIRTUAL WALL SYSTEM**
FÜHRUNGSARTIGES VIRTUELLES WANDSYSTEM
SYSTÈME À PAROI DE GUIDAGE VIRTUELLE

(30) Priority: 07.11.2014 CN 201410624374
(43) Date of publication of application: 13.09.2017
(73) Proprietor: Ecovacs Robotics Co., Ltd., Suzhou, Jiangsu 215168 (CN)
(72) Inventor: TANG, Jinju, Suzhou Jiangsu 215168 (CN)
(74) Representative: v. Bezold & Partner Patentanwälte - PartG mbB
(86) International application number: PCT/CN2015/093955
(87) International publication number: WO 2016/070835

(56) References cited:
- CN-A- 102 048 499
- CN-A- 102 156 473
- CN-A- 103 220 955
- CN-U- 204 229 229
- KR-B1- 101 317 725
- KR-B1- 101 317 725
- US-A1- 2010 222 926
- US-A1- 2012 197 434

## Description

### Field of the Invention

The present invention relates to a guide-type virtual wall system, which belongs to the technical field of the manufacture of small household electric appliances.

### Background art

In modern life, the application of robots has become more and more popular. It is expected that there is a virtual wall signal to restrict the robot from entering a certain area in practical operations. In the prior art, there are two main methods to form a virtual wall: (1) a method using a magnetic boundary, that is, a magnetic stripe is attached to the boundary of a restricted area, and when the robot detects the magnetic stripe, it keeps away from the magnetic stripe, which is relatively complicated to operate; and (2) a method using an active emitting device (for example, in the US patent No. 7579803B2, an emitting device is used to emit an infrared signal, an ultrasonic signal, or the like, and when the robot detects these signals, it keeps away from these signals), although this method is easy to operate, a part of the area covered by the signal may be missed. Further, the virtual wall is used to form an absolute restriction on the restricted area in both of the above methods. KR 101 317 725 B1 discloses a similar technical solution. However, in practical operations, the robot sometimes needs to cross over the virtual wall to enter the restricted area, but neither of the existing technical solutions can achieve such operation.

### Summary of the Invention

To overcome the deficiencies in the prior art, the present invention aims to provide a guide-type virtual wall system, which is capable of restricting the robot from entering a certain area without missing the area where the virtual wall locates and also enables the robot to cross over the virtual wall to enter the restricted area when required.

The technical objective of the present invention is realized through the following technical solutions:
A guide-type virtual wall system comprises a beacon and a robot, wherein a transmission module of the beacon directionally transmits a first signal, an area covered by the first signal defines a beacon signal area, and the robot comprises a beacon signal receiving module corresponding to the beacon signal transmission module. When the robot enters the beacon signal area and the beacon signal receiving module detects the first signal, the robot advances towards the direction of the beacon until it detects a second signal, and then the robot crosses over or exits from the beacon signal area.

Preferably, the beacon signal transmission module is provided with a plurality of sub-signal transmission modules, and each of the sub-signal transmission modules transmits a sub-signal in a direction different from each other.

According to one embodiment of the present invention, the first signal or the second signal is provided with certain encoded information, and when the robot detects the second signal, the robot determines whether to cross over or exit from the beacon signal area based on the encoded information.

Preferably, the plurality of sub-signals are provided with different encoded information.

According to another embodiment of the present invention, when the robot detects the second signal, the robot exits from the beacon signal area.

Preferably, the robot further comprises an obstacle detecting module, and the second signal is generated when the robot detects an obstacle.

Preferably, the obstacle detecting module is an infrared sensor, an ultrasonic sensor or a travel switch.

According to yet another embodiment of the present invention, the guide-type virtual wall system further comprises a second signal generator provided on one side close to the beacon or provided on the beacon, and the robot is provided with a corresponding second signal sensor, the second signal being generated by the second signal generator.

Preferably, an area covered by the signal generated by the second signal generator defines a second signal area, and the beacon is provided within the second signal area.

Preferably, the second signal generator is a passive device or an active device. Preferably, the passive device is an electronic tag, a magnetic stripe or a color card, and the active device is an infrared transmitter, an ultrasonic transmitter, or a radio wave transmitter.

Preferably, the beacon signal transmission module is an infrared transmission module or an ultrasonic transmission module.

Preferably, the infrared transmission module or the ultrasonic transmission module comprises one or more emission sources.

Preferably, the robot is a floor cleaning robot, an air purification robot or a monitoring robot.

The present invention is advantageous in that, by additionally providing a second signal in the virtual wall system, it is enabled not only that the robot is restricted from entering a certain area without missing the area where the virtual wall locates, but also that the robot is allowed to cross over the virtual wall to enter the restricted area when required.

The technical solution of the present invention now will be described in detail with reference to the accompanying drawings and specific embodiments.

### Description of attached drawings

Fig. 1 is a schematic view of the overall application of the guide-type virtual wall of the present invention;
Fig. 2 is a partial enlarged view of the area C shown in Fig. 1 of the present invention; and
Fig. 3 is a schematic view of another overall application of the guide-type virtual wall of the present invention.

### Detailed Description of Preferred Embodiments

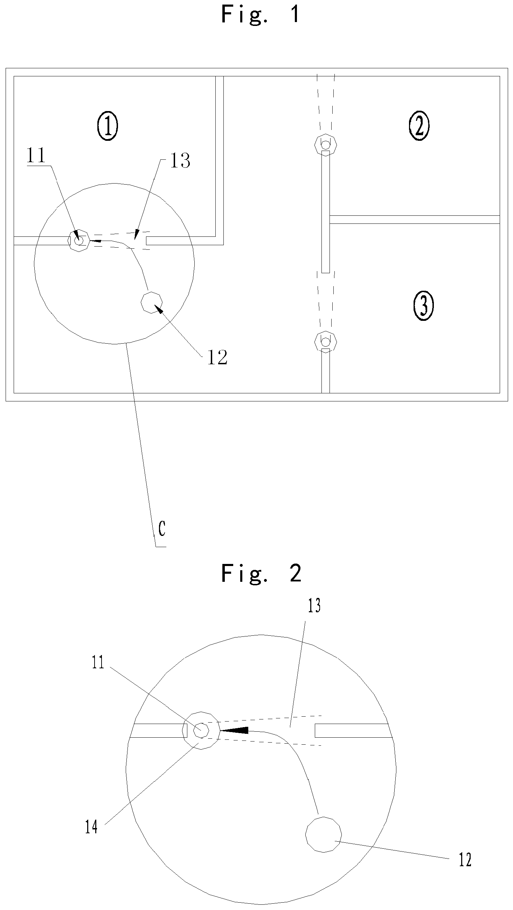

Fig. 1 is a schematic view of the overall application of the guide-type virtual wall of the present invention. As shown in Fig. 1, the virtual wall system of the present invention comprises a beacon 11 and a robot 12. The beacon 11 is generally provided at an entrance of a certain area, such as a doorway of a room. In Fig. 1, there are three rooms, which are Room ①, Room ② and Room ③ respectively. Each room has a door, with a beacon of the virtual wall system of the present invention being installed at the bottom of one side of the door frame. The beacon transmits a first signal to the other side of the door frame, and an area covered by the first signal defines a beacon signal area 13 which constitutes the virtual wall of the present invention. The robot 12 may be a floor cleaning robot, an air purification robot, a monitoring robot, or the like. When the robot 12 detects the first signal, the robot 12 advances towards the direction of the beacon 11 until it detects a second signal, and then the robot 12 crosses over or exits from the beacon signal area 13. Specifically, exiting from the beacon signal area 13 means that the robot leaves the beacon signal area 13 from the same side as that when initially entering the beacon signal area, and crossing over the beacon signal area 13 means that the robot leaves the beacon signal area 13 from the opposed side to that when entering the beacon signal area.

In the following, the present invention will be described in detail with reference to four embodiments.

### First embodiment

Fig. 2 is a partial enlarged view of the area C shown in Fig. 1 of the present invention. As shown in Fig. 2, in the present embodiment, the beacon 11 comprises a beacon signal transmission module, such as an infrared transmission module or an ultrasonic transmission module, and the infrared transmission module or the ultrasonic transmission module may comprise one or more emission sources that transmit towards the same direction, depending on the needs to the signal intensity. The robot 12 comprises a beacon signal receiving module corresponding to the beacon signal transmission module, such as an infrared receiving module or an ultrasonic receiving module. In addition, the robot 12 also comprises an obstacle detecting module, and the obstacle detecting module may be an infrared sensor, an ultrasonic sensor or a travel switch. The beacon is provided at the bottom of one side of the door frame of a room and directionally transmits a beacon signal, i.e., a first signal, to the other side of the door frame via the beacon signal transmission module, and an area covered by the first signal defines a beacon signal area 13. When the robot 12 enters the beacon signal area 13 and the beacon signal receiving module detects the first signal, the robot 12 advances towards the direction of the beacon 11 until the obstacle detecting module on the robot 12 detects an obstacle and a second signal is generated, and then the robot 12 exits from the beacon signal area 13. It should be noted that, in the present embodiment, the obstacle is the beacon 11, and in the other embodiments of the present invention, the obstacle may also be other objects, such as a door frame or a wall.

### Second embodiment

In the first embodiment, the robot 12 advances towards the direction of the beacon 11 when detecting the first signal, i.e., the beacon signal. However, actually, the position from which the robot 12 enters the beacon signal area 13 is random, and thus in the present embodiment, the robot 12 may advance either towards or away from the direction of the beacon 11. As shown in Fig. 2, if the robot advances away from the direction of the beacon 11, the robot 12 may meet an obstacle, such as the other door frame or a wall, away from the beacon 11, or the robot may meet nothing. Thus, it is necessary to set a predetermined distance for which the robot can walk so that, if the robot detects an obstacle within the predetermined distance, a second signal is generated to allow the robot to exit from the beacon signal area 13, and if the robot meets no obstacle within the predetermined distance, a second signal is also generated to allow the robot to exit from the beacon signal area 13 when the robot has walked for the predetermined distance. Of course, such predetermined distance may also be applied to the case where the robot advances towards the direction of the beacon 11.

### Third embodiment

The present embodiment is different from the first and the second embodiments in that the second signal is not generated by the robot meeting an obstacle or when the robot having walked for a predetermined distance, and a second signal generator used to generate a second signal is additionally provided on one side close to the beacon or provided on the beacon, with the robot 12 being provided with a corresponding second signal sensor. An area covered by the signal generated by the second signal generator defines a second signal area 14, and the second signal generator may be an active device (e.g., an infrared transmitter, an ultrasonic transmitter or a radio wave transmitter) or a passive device (such as an electronic tag, a magnetic stripe or a color card). When the beacon signal receiving module on the robot 12 detects the first signal, the robot 12 advances towards the direction of the beacon 11 until it enters the second signal area 14 and the second signal sensor on the robot 12 detects the second signal, and then the robot 12 exits from the beacon signal area 13. It is to be noted that, here, the reason why the second signal generator is provided within the beacon signal area 13 on one side close to the beacon is that the directionally transmitted beacon signal is spindle-shaped, and thus it can be better guaranteed that the second signal can be detected by the robot if the robot 12 advances towards the direction of the beacon when detecting the first signal. As a more preferable embodiment, the beacon 11 may be provided within the second signal area 14 so as to prevent the beacon 11 from being deformed or damaged due to the collision between the robot and the beacon 11, that is, it corresponds to that the second signal forms a virtual protective cover outside the beacon.

### Fourth embodiment

The present embodiment differs from the third embodiment in that the first signal or the second signal is provided with certain encoded information which is capable of identifying a certain area such as a room. When the robot detects the second signal, the robot determines whether to cross over or exit from the beacon signal area based on the encoded information. Specifically, the robot can access the encoded information and the cleaning state information corresponding to each piece of the encoded information. When the robot detects certain encoded information, it may further extract the cleaning state information corresponding to such encoded information and perform a corresponding action based on the cleaning state information. For example, when the cleaning state information indicates that the area has been cleaned, the robot may exit from the beacon signal area, and when the cleaning state information indicates that the area has not been cleaned, the robot may cross over the beacon signal area. More specifically, the infrared transmission module or the ultrasonic transmission module that generates the first signal may transmit an infrared ray or an ultrasonic wave with the encoded information; the active device, such as an infrared transmitter, an ultrasonic transmitter or a radio wave transmitter, that generates the second signal may transmit an infrared ray, an ultrasonic wave, or a radio wave with the encoded information; the passive device, such as an electronic tag and a magnetic stripe, that generates the second signal may store the encoded information in advance, and then the robot 12 may read out the encoded information when entering the second signal area; and the color card can distinguish the rooms from each other through different colors that also constitute the encoded information.

The present embodiment is illustrated by a cleaning robot as an example. The robot 12 may access the room identification information and the cleaning state information of each room of the encoded information. Upon detecting the beacon signal, the robot 12 may advance towards the direction of the beacon, and when the robot reaches to the second signal area 14, it reads out the encoded information of the second signal (for example, the robot reaches to Room ①). Specifically, the robot may recognize that the room is Room ①, and further extract the stored cleaning state information for each room so as to determine whether Room CD has been cleaned or not. If it is determined that Room CD has been cleaned, the robot may not enter the room and exit from the beacon signal area 13, that is, the robot may leave the beacon signal area 13 from the same side as that when entering the beacon signal area 13. In other words, the robot 12 does not cross over the beacon signal area 13, but instead, it exits from such area along the initially entering direction. If it is determined that Room CD has not been cleaned, the robot enters Room ① so as to perform cleaning, and the robot 12 leaves the beacon signal area 13 from the opposed side to that when entering the beacon signal area 13. That is, the robot 12 has crossed over the beacon signal area 13. Upon completion of the cleaning, the robot may leave the room and update the cleaning state of Room CD to be " having been cleaned."

### Fifth embodiment

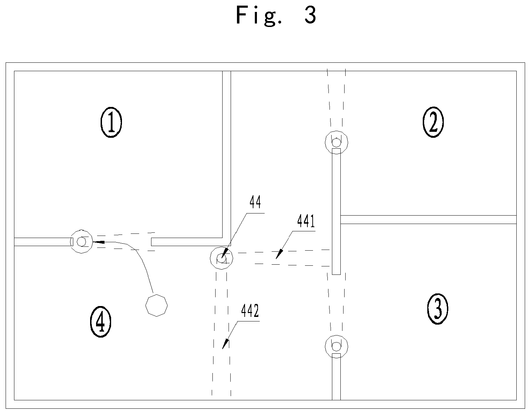

The present embodiment differs from the fourth embodiment in that the beacon signal transmission module is provided with a plurality of sub-signal transmission modules, and each of the sub-signal transmission modules transmits a sub-signal in a direction different from each other. The first signal comprises two sub-signals transmitted in different directions. As shown in Fig. 3, the first signal of the beacon 44 located within Room ④ comprises two sub-signals 441, 442 perpendicular to each other. In the present embodiment, Room ④ is divided into three areas by one beacon. Preferably, the sub-signals 441, 442 carry with different encoded information such that the robot may recognize different areas. It is to be noted that those skilled in the art may correspondingly adjust the number of the set sub-signals and the angles at which the sub-signals are transmitted as needed so as to improve the operation efficiency of the robot.

It is additionally to be noted that, it may also be applied to the first embodiment, the second embodiment and the third embodiment that the first signal or the second signal carries with the encoded information as in the present embodiment. When the robot 12 enters the beacon signal area 13 and the beacon signal receiving module detects the first signal, the robot 12 advances towards the direction of the beacon 11 until it detects a second signal, and then the robot determines whether to cross over or exit from the beacon signal area based on the encoded information.

## Claims

1. A guide-type virtual wall system comprising a beacon (11) and a robot (12), a transmission module of the beacon (11) directionally transmitting a first signal, an area covered by the first signal defining a beacon signal area (13), and the robot (12) comprising a beacon signal receiving module corresponding to the beacon signal transmission module, **characterized in that**,
when the robot (12) enters the beacon signal area (13) and the beacon signal receiving module detects the first signal, the robot (12) advances towards the direction of the beacon (11) until it detects a second signal, and then the robot (12) crosses over or exits from the beacon signal area (13).

2. A guide-type virtual wall system according to claim 1, **characterized in that**, the beacon signal transmission module is provided with a plurality of sub-signal transmission modules, and each of the sub-signal transmission modules transmits a sub-signal in a direction different from each other.

3. A guide-type virtual wall system according to claim 2, **characterized in that**, the first signal or the second signal is provided with certain encoded information, and when the robot detects the second signal, the robot determines whether to cross over or exit from the beacon signal area based on the encoded information.

4. A guide-type virtual wall system according to claim 3, **characterized in that**, the plurality of sub-signals are provided with different encoded information.

5. A guide-type virtual wall system according to any one of claims 1-4, **characterized in that**, the robot (12) further comprises an obstacle detecting module, and the second signal is generated when the robot (12) detects an obstacle.

6. A guide-type virtual wall system according to claim 5, **characterized in that**, the obstacle detecting module is an infrared sensor, an ultrasonic sensor or a travel switch.

7. A guide-type virtual wall system according to any one of claims 1-4, **characterized in that**, the guide-type virtual wall system further comprises a second signal generator provided on one side close to the beacon or provided on the beacon, and the robot (12) is provided with a corresponding second signal sensor, the second signal being generated by the second signal generator.

8. A guide-type virtual wall system according to claim 7, **characterized in that**, an area covered by the signal generated by the second signal generator defines a second signal area, and the beacon is provided within the second signal area.

9. A guide-type virtual wall system according to claim 8, **characterized in that**, the second signal generator is a passive device or an active device.

10. A guide-type virtual wall system according to claim 9, **characterized in that**, the passive device is an electronic tag, a magnetic stripe or a color card, and the active device is an infrared transmitter, an ultrasonic transmitter, or a radio wave transmitter.

11. A guide-type virtual wall system according to claim 1, **characterized in that**, the beacon signal transmission module is an infrared transmission module or an ultrasonic transmission module.

12. A guide-type virtual wall system according to claim 11, **characterized in that**, the infrared transmission module or the ultrasonic transmission module comprises one or more emission sources.

13. A guide-type virtual wall system according to claim 1, **characterized in that**, the robot is a floor cleaning robot, an air purification robot or a monitoring robot.

14. A guide-type virtual wall system according to claim 1, **characterized in that**,
the second signal being generated when the robot (12) walks for a certain distance.

## Patentansprüche

1. Führungsartiges virtuelles Wandsystem umfassend eine Funkbake (11) und einen Roboter (12), wobei ein Sendemodul der Funkbake (11) ein erstes Signal gerichtet sendet, wobei ein von dem ersten Signal abgedeckter Bereich einen Funkbakensignalbereich (13) definiert, und wobei der Roboter (12) ein Funkbakensignal-Empfangsmodul umfasst, das dem Funkbakensignal-Sendemodul entspricht, **dadurch gekennzeichnet, dass**,
wenn der Roboter (12) in den Funkbakensignalbereich (13) eintritt und das Funkbakensignal-Empfangsmodul das erste Signal detektiert, der Roboter (12) sich in Richtung der Funkbake (11) bewegt, bis er ein zweites Signal detektiert, und der Roboter (12) dann den Funkbakensignalbereich (13) überquert oder verlässt.

2. Führungsartiges virtuelles Wandsystem nach Anspruch 1, **dadurch gekennzeichnet, dass** das Funkbakensignal-Sendemodul mit einer Vielzahl von Untersignal-Sendemodulen versehen ist, und jedes der Untersignal-Sendemodule ein Untersignal in einer voneinander verschiedenen Richtung sendet.

3. Führungsartiges virtuelles Wandsystem nach Anspruch 2, **dadurch gekennzeichnet, dass** das erste Signal oder das zweite Signal mit bestimmten kodierten Informationen versehen ist, und wenn der Roboter das zweite Signal erkennt, bestimmt der Roboter auf der Grundlage der kodierten Informationen, ob er den Funkbakensignalbereich überquert oder verlässt.

4. Führungsartiges virtuelles Wandsystem nach Anspruch 3, **dadurch gekennzeichnet, dass** die mehreren Untersignale mit unterschiedlichen kodierten Informationen versehen sind.

5. Führungsartiges virtuelles Wandsystem nach einem der Ansprüche 1 bis 4, **dadurch gekennzeichnet, dass** der Roboter (12) ferner ein Hindernisdetektiermodul umfasst und das zweite Signal erzeugt wird, wenn der Roboter (12) ein Hindernis detektiert.

6. Führungsartiges virtuelles Wandsystem nach Anspruch 5, **dadurch gekennzeichnet, dass** das Hindernisdetektiermodul ein Infrarotsensor, ein Ultraschallsensor oder ein Fahrschalter ist.

7. Führungsartiges virtuelles Wandsystem nach einem der Ansprüche 1 bis 4, **dadurch gekennzeichnet, dass** das virtuelle Wandleitsystem ferner einen zweiten Signalgenerator umfasst, der auf einer Seite nahe der Funkbake oder auf der Funkbake vorgesehen ist, und dass der Roboter (12) mit einem entsprechenden zweiten Signalsensor versehen ist, wobei das zweite Signal von dem zweiten Signalgenerator erzeugt wird.

8. Führungsartiges virtuelles Wandsystem nach Anspruch 7, **dadurch gekennzeichnet, dass** ein Bereich, der von dem von dem zweiten Signalgenerator erzeugten Signal erfasst wird, einen zweiten Signalbereich definiert, und die Funkbake innerhalb des zweiten Signalbereichs vorgesehen ist.

9. Führungsartiges virtuelles Wandsystem nach Anspruch 8, **dadurch gekennzeichnet, dass** der zweite Signalgenerator eine passive Vorrichtung oder eine aktive Vorrichtung ist.

10. Führungsartiges virtuelles Wandsystem nach Anspruch 9, **dadurch gekennzeichnet, dass** die passive Vorrichtung ein elektronisches Kennzeichen, ein Magnetstreifen oder eine Farbkarte ist und die aktive Vorrichtung ein Infrarotsender, ein Ultraschallsender oder ein Radiowellensender ist.

11. Führungsartiges virtuelles Wandsystem nach Anspruch 1, **dadurch gekennzeichnet, dass** das Funkbakensignal-Sendemodul ein Infrarot-Sendemodul oder ein Ultraschall-Sendemodul ist.

12. Führungsartiges virtuelles Wandsystem nach Anspruch 11, **dadurch gekennzeichnet, dass** das Infrarot-Sendemodul oder das Ultraschall-Sendemodul eine oder mehrere Emissionsquellen umfasst.

13. Führungsartiges virtuelles Wandsystem nach Anspruch 1, **dadurch gekennzeichnet, dass** der Roboter ein Bodenreinigungsroboter, ein Luftreinigungsroboter oder ein Überwachungsroboter ist.

14. Führungsartiges virtuelles Wandsystem nach Anspruch 1, **dadurch gekennzeichnet, dass** das zweite Signal erzeugt wird, wenn der Roboter (12) eine bestimmte Strecke zurücklegt.

## Revendications

1. Système à paroi de guidage virtuelle comprenant une balise (11) et un robot (12), un module de transmission de la balise (11) transmettant directionnellement un premier signal, une zone couverte par le premier signal définissant une zone de signal de balise (13), et le robot (12) comprenant un module de réception de signal de balise correspondant au module de transmission de signal de balise, **caractérisé en ce que**
lorsque le robot (12) entre dans la zone de signal de balise (13) et le module de réception de signal de balise détecte le premier signal, le robot (12) avance dans la direction de la balise (11) jusqu'à ce qu'il détecte un second signal, puis le robot (12) traverse ou sort de la zone de signal de balise (13).

2. Système à paroi de guidage virtuelle selon la revendication 1, **caractérisé en ce que** le module de transmission de signal de balise est pourvu d'une pluralité de modules de transmission de sous-signal, et chacun des modules de transmission de sous-signal transmet un sous-signal dans une direction différente l'un de l'autre.

3. Système à paroi de guidage virtuelle selon la revendication 2, **caractérisé en ce que** le premier signal ou le second signal est pourvu de certaines informations codées et, lorsque le robot détecte le second signal, le robot détermine s'il faut traverser ou sortir de la zone de signal de balise sur la base des informations codées.

4. Système à paroi de guidage virtuelle selon la revendication 3, **caractérisé en ce que** la pluralité de sous-signaux sont pourvus d'informations codées différentes.

5. Système à paroi de guidage virtuelle selon l'une quelconque des revendications 1 à 4, **caractérisé en ce que** le robot (12) comprend en outre un module de détection d'obstacle et le second signal est généré lorsque le robot (12) détecte un obstacle.

6. Système à paroi de guidage virtuelle selon la revendication 5, **caractérisé en ce que** le module de détection d'obstacle est un capteur infrarouge, un capteur ultrasonore ou un commutateur de déplacement.

7. Système à paroi de guidage virtuelle selon l'une quelconque des revendications 1 à 4, **caractérisé en ce que** le système à paroi de guidage virtuelle comprend en outre un second générateur de signal prévu sur un côté proche de la balise ou prévu sur la balise, et le robot (12) est pourvu d'un second capteur de signal correspondant, le second signal étant généré par le second générateur de signal.

8. Système à paroi de guidage virtuelle selon la revendication 7, **caractérisé en ce qu'**une zone couverte par le signal généré par le second générateur de signal définit une seconde zone de signal et la balise est prévue à l'intérieur de la seconde zone de signal.

9. Système à paroi de guidage virtuelle selon la revendication 8, **caractérisé en ce que** le second générateur de signal est un dispositif passif ou un dispositif actif.

10. Système à paroi de guidage virtuelle selon la revendication 9, **caractérisé en ce que** le dispositif passif est une étiquette électronique, une bande magnétique ou une carte de couleur, et le dispositif actif est un émetteur infrarouge, un émetteur ultrasonore ou un émetteur d'ondes radio.

11. Système à paroi de guidage virtuelle selon la revendication 1, **caractérisé en ce que** le module de transmission de signal de balise est un module de transmission infrarouge ou un module de transmission ultrasonore.

12. Système à paroi de guidage virtuelle selon la revendication 11, **caractérisé en ce que** le module de transmission infrarouge ou le module de transmission ultrasonore comprend une ou plusieurs sources d'émission.

13. Système à paroi de guidage virtuelle selon la revendication 1, **caractérisé en ce que** le robot est un robot de nettoyage de sol, un robot de purification d'air ou un robot de surveillance.

14. Système à paroi de guidage virtuelle selon la revendication 1, **caractérisé en ce que**
le second signal est généré lorsque le robot (12) parcourt une certaine distance.
